# EUROPEAN PATENT SPECIFICATION

(11) **EP 3 299 229 B1**
(45) Date of publication and mention of the grant of the patent: **28.04.2021**
(21) Application number: 17190827.0
(22) Date of filing: 13.09.2017
(51) Int. Cl.: B60T 1/06, B60T 7/10, B60T 13/26

(54) **AN AUTOMATIC PARKING BRAKE**
AUTOMATISCHE PARKBREMSE
FREIN DE STATIONNEMENT AUTOMATIQUE

(30) Priority: 23.09.2016 TR 201613346
(43) Date of publication of application: 28.03.2018
(73) Proprietor: Temsa Ulasim Araclari Sanayi ve Ticaret Anonim Sirketi, Adana (TR)
(72) Inventor: Kemal, CANBOLAT, ADANA (TR); Tayfun, TEL, 0123 ADANA (TR)
(74) Representative: Dericioglu, E. Korhan

(56) References cited:
- WO-A1-99/51474
- DE-A1- 3 113 362
- GB-A- 1 179 610
- GB-A- 2 309 496
- GB-A- 2 429 756
- JP-A- H05 178 174
- JP-A- S60 252 048
- JP-A- S62 247 958
- JP-U- S6 414 557
- US-A- 3 892 294
- US-A- 4 561 527
- US-A1- 2004 173 043

## Description

### Field of the Invention

The present invention relates to an automatic parking brake which provides the feature of full automatic hand brake to a vehicle having a mechanical (with ropes) hand brake system without disrupting operation of the existing systems.

### Background of the Invention

Brakes systems are systems which enable the vehicles to decelerate and stop. The brake systems enable to decrease the speed of the vehicle by converting the kinetic energy of the vehicle to heat energy via friction. This system is basically operated by depressing a brake pedal disposed on the vehicle floor. Upon depressing this pedal, hydraulic pressure is formed in a piston and the pressurized liquid is transferred to a brake disc having a friction surface. When the amount of depression on the brake pedal increases, the hydraulic pressure increases; and when the pedal is released, the pressure is cancelled out.

Hand brakes are systems which prevent movement of the vehicle due to external factors or gravity when the vehicles are parked. Hand brakes comprise mechanisms generally comprised of mechanical parts. In the old systems, these mechanisms function such that when the user rotates or lifts the lever, to which the hand brake wire is connected, the hand brake wire exerts pressure on the brake disc, to which the other end of the hand brake wire is connected. In heavy duty vehicles such as tractors and agricultural vehicles, the user has to exert more power to operate these systems. In such cases, most of the users prefer to leave the vehicle in gear. In these cases, accidents with severe consequences may occur when the vehicle is loaded. While hand brake systems generally apply brake to the rear wheels of the vehicle, there are also hand brakes which apply brake to all of the wheels.

Today, electro-hydraulic hand brakes are being developed in place of mechanical hand brakes. In these brake systems, hydraulic pressure is generated by a hydraulic pressure generator and this pressure is continuously applied on the brake discs. It is sufficient to press an input unit provided in the vehicle in order to operate these systems. Even though these systems are successful in application, they are not preferred due to their high costs.

Systems which enable to keep the vehicle stationary when the vehicle is parked or a passenger is getting on/out of the vehicle is defined as parking brake. The said systems are used in the art with manual or automatic features. There is provided a Lift option in commercial vehicles in addition to the normal use for facilitating mounting/dismounting of the disabled passengers. When the commercial vehicles activate the lift for taking the passengers in, a brake system is required for preventing movement of the vehicle. In the state of the art, brake systems with lifts are operated manually and are used under the responsibility of the driver. In other words, the driver is required to pull the hand brake in order to prevent movement of the vehicle during use of the disabled access ramp (lift) in the state of the art Some examples of this kind of systems are known from the JP S60 252 048 A, GB 2 429 756 A and US 2004/173043 A1

### Problems Solved by the Invention

The objective of the present invention is to provide an automatic parking brake which, when the disabled access ramp/lift is activated, automatically activates the parking brake of the vehicle and thus minimizes the driver faults.

Another objective of the present invention is to provide an automatic parking brake which can be incorporated in addition to the park brake system existing in the vehicle.

A further objective of the present invention is to provide an automatic parking brake which prevents movement of the vehicle unless the vehicle door is closed.

### Detailed Description of the Invention

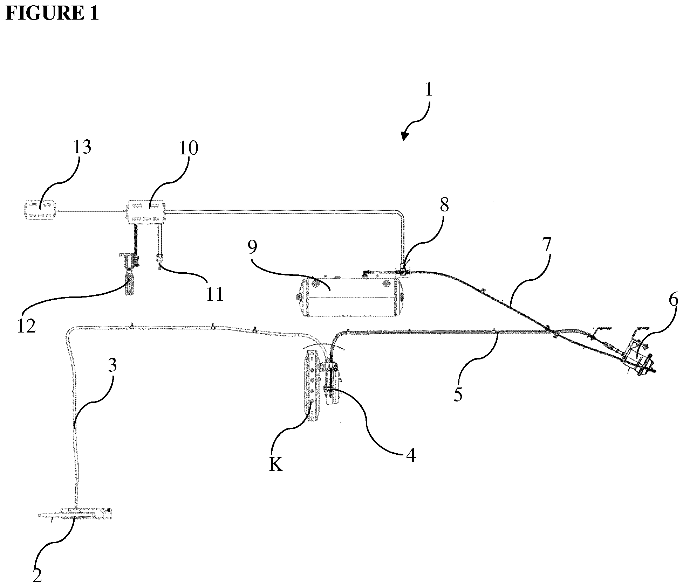

An automatic parking brake developed to fulfill the objective of the present invention is illustrated in the accompanying figures, in which
**Figure 1****.** is a schematic view of the automatic parking brake.

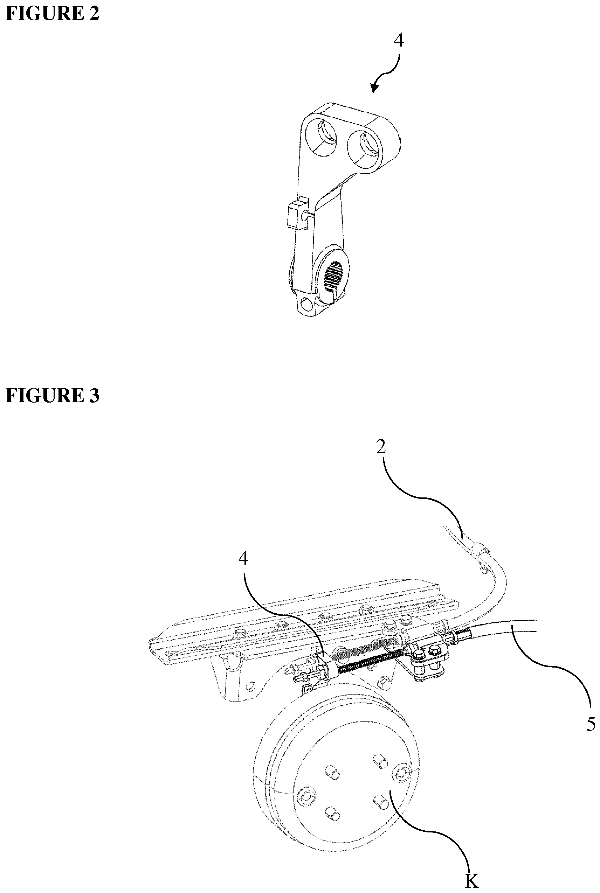

**Figure 2****.** is a perspective view of the lever.
**Figure 3****.** is a perspective view of the connection of the lever and the drum.

The components shown in the figures are given reference numbers as follows:
**1.** Automatic parking brake
**2.** Hand brake arm
**3.** First hand brake rope
**4.** Lever
**5.** Second hand brake rope
**6.** Brake chamber
**7.** Air hose
**8.** Solenoid valve
**9.** Air tank
**10.** Vehicle control unit
**11.** Switch
**12.** Accelerator pedal
**13.** Engine control unit

### K. Drum

An automatic parking brake (1), which provides the feature of full automatic hand brake to a vehicle having a mechanical (with ropes) hand brake system without disrupting operation of the existing systems, basically comprises
- at least one hand brake arm (2),
- at least one first hand brake rope (3) which is connected to the hand brake arm (2),
- at least one lever (4) to which the other end of the hand brake rope (3) is connected and which is located on the drum (K),
- at least one second hand brake rope (5) which is connected onto the lever (4),
- at least one brake chamber (6) to which the second hand brake rope (5) is connected,
- at least one air hose (7) which is connected to the brake chamber (6),
- at least one solenoid valve (8) to which the air hose (7) is connected,
- at least one air tank (9) to which the solenoid valve (8) is connected,
- at least one vehicle control unit (10) which is connected to the solenoid valve (8) via a cable and is adapted to control the solenoid valve (8),
- at least one switch (11) which is adapted to control the vehicle control unit (10),
- at least one gas pedal (12) which is adapted to control the vehicle control unit (10),
- at least one engine control unit (13) which is adapted to be controlled by the vehicle control unit (10).

The automatic parking brake (1) of the present invention comprises a hand brake arm (2) and a first hand brake rope (3) connected to the hand brake arm (2). A lever (4) is connected to the other end of the first hand brake rope (3). The lever (4) is connected onto the drum (K). The lever (4), which is in the form of a flat rod, has two connection holes on one side thereof and is connected to the drum (K) from the other side thereof; and a first hand brake rope (3) is connected to one of the connection holes thereof. The second hand brake rope (5) is connected to the other connection hole. The second hand brake rope (5), one end of which is connected to the lever (4), extends towards the brake chamber (6) and is connected to the brake chamber (6). An air hose (7) is connected onto the brake chamber (6) which is operated via air. On end of the air hose (7), which is connected to the brake chamber (6), is connected to the solenoid valve (8). The solenoid valve (8) preferred for the present invention is 3-way. An air hose (7) is connected to one end of the solenoid valve (8) and an air tank (9) is connected to the other end thereof. The solenoid valve (8) has an exhaust port capable of discharging to the atmosphere. In order for the solenoid valve (8) to be electronically controlled, the solenoid valve (8) is connected to the control unit (10) via cables.

The automatic parking brake (1) of the present invention provides the feature of full automatic hand brake to a vehicle having a mechanical (with ropes) hand brake system without disrupting operation of the existing systems. Accordingly, by mounting the lever (4) to the part of the hand brake of the vehicle that is mounted to the drum (K), the hand brake fulfills its standard function. However, both the first hand brake rope (3) and the second hand brake rope (5) are connected on the lever (4) that is used. The first hand brake rope (3) and the second hand brake rope (5) enable to lock the drum (K) by moving the lever (4) independent from each other. This way, an automatic parking brake (1) is realized which can be incorporated in addition to the park brake system existing in the vehicle. The vehicle control unit (10) used for controlling the second hand brake rope (5) is operated via a switch (11). When the driver activates the switch (11), the vehicle control unit (10) sends a signal, by which it enables the solenoid valve (8) to close the inlet port and open the outlet port to the atmosphere, thereby preventing air from going from the air tank (9) to the brake chamber (6) and enabling the air in the brake chamber to be discharged to the atmosphere. When there is no air, the spring in the brake chamber (6) stretches out and pulls the hand brake rope (5). When the second hand brake rope (5) is pulled, the lever (4) moves, and upon compressing the drum (K), prevents movement of the vehicle. This way, the automatic parking brake (1) automatically activates the park brake of the vehicle when the disabled access ramp/lift is activated, and thus minimizes the driver faults.

In a preferred embodiment of the invention, if the driver depresses the gas pedal (12) when the switch (11) is turned on, i.e. when the vehicle is in stationary position, the vehicle does not move. By means of the fact that the gas pedal (12) is connected to the vehicle control unit (10), since the switch (11) is turned on, transmission of possible gas pedal (12) signals to the engine control unit (13) is cut off by the vehicle control unit (10) thereby preventing movement of the vehicle.

In a preferred embodiment of the invention, the switch (11) is placed on the door and it prevents movement of the vehicle in cases where the door is open. Thus, an automatic parking brake (1) is realized which prevents movement of the vehicle unless the vehicle door is closed.

## Claims

1. An automatic parking brake (1), which provides the feature of full automatic hand brake to a vehicle having a mechanical (with ropes) hand brake system without disrupting operation of the existing systems, **basically comprising**
- at least one hand brake arm (2),
- at least one first hand brake rope (3) which is connected to the hand brake arm (2),
**and characterized by**
- at least one lever (4) to which the other end of the hand brake rope (3) is connected and which is located on the drum (K),
- at least one lever (4), which is in the form of a flat rod, has two connection holes on one side thereof, and is connected to the drum (K) from the other side thereof,
- at least one second hand brake rope (5) which is connected onto the lever (4),
- at least one brake chamber (6) to which the second hand brake rope (5) is connected,
- at least one air hose (7) which is connected to the brake chamber (6),
- at least one solenoid valve (8) to which the air hose (7) is connected,
- at least one air tank (9) to which the solenoid valve (8) is connected,
- at least one vehicle control unit (10) which is connected to the solenoid valve (8) via a cable and is adapted to control the solenoid valve (8),
- at least one switch (11) which is adapted to control the vehicle control unit (10).

2. An automatic parking brake (1) according to Claim 1, **comprising** at least one gas pedal (12) which is adapted to control the vehicle control unit (10).

3. An automatic parking brake (1) according to Claim 1, **comprising** at least one engine control unit (13) which is adapted to be controlled by the vehicle control unit (10).

4. An automatic parking brake (1) according to Claim 1, **comprising** at least one switch (11) which is placed on the door and which prevents movement of the vehicles when the door is open.

## Patentansprüche

1. Automatische Feststellbremse (1), die einem Fahrzeug mit einem mechanischen (mit Seilen) Handbremssystem die Eigenschaft einer vollautomatischen Handbremse verleiht, ohne den Betrieb der vorhandenen Systeme zu unterbrechen, **im Wesentlichen umfassend**
- mindestens einen Handbremsarm (2),
- mindestens ein erstes Handbremsseil (3), das mit dem Handbremsarm (2) verbunden ist
**und gekennzeichnet durch**
- mindestens einem Hebel (4), mit dem das andere Ende des Handbremsseils (3) verbunden ist und der auf der Trommel (K) angeordnet ist,
- mindestens einem Hebel (4), der als flache Stange ausgebildet ist, auf seiner einen Seite zwei Anschlusslöcher aufweist und von seiner anderen Seite mit der Trommel (K) verbunden ist,
- mindestens ein zweites Handbremsseil (5), das mit dem Hebel (4) verbunden ist,
- mindestens eine Bremskammer (6), an die das zweite Handbremsseil (5) verbunden ist,
- mindestens einem Luftschlauch (7), der mit der Bremskammer (6) verbunden ist,
- mindestens ein Magnetventil (8), an das der Luftschlauch (7) verbunden ist,
- mindestens einen Luftbehälter (9), an den das Magnetventil (8) verbunden ist,
- mindestens ein Fahrzeugsteuergerät (10), das über ein Kabel mit dem Magnetventil (8) verbunden ist und zur Steuerung des Magnetventils (8) eingerichtet ist,
- mindestens einen Schalter (11), der zur Steuerung des Fahrzeugsteuergerätes (10) eingerichtet ist.

2. Automatische Feststellbremse (1) nach Anspruch 1, **umfassend** mindestens ein Gaspedal (12), das zur Steuerung des Fahrzeugsteuergeräts (10) eingerichtet ist.

3. Automatische Feststellbremse (1) nach Anspruch 1, **umfassend** mindestens ein Motorsteuergerät (13), das durch das Fahrzeugsteuergerät (10) zur Steuerung eingerichtet ist.

4. Automatische Feststellbremse (1) nach Anspruch 1, **umfassend** mindestens einen Schalter (11), der an der Tür angebracht ist und der die Bewegung der Fahrzeuge bei geöffneter Tür verhindert.

## Revendications

1. Frein de stationnement automatique (1), qui fournit la caractéristique de frein à main entièrement automatique à un véhicule ayant un système de frein à main mécanique (avec cordes) sans perturber le fonctionnement des systèmes existants, **comprenant essentiellement**
- au moins un bras de frein à main (2),
- au moins une première corde de frein à main (3) qui est reliée au bras de frein à main (2),
**et caractérisé par**
- au moins un levier (4) auquel est reliée l'autre extrémité de la corde de frein à main (3) et qui est situé sur le tambour (K),
- au moins un levier (4), qui a la forme d'une tige plate, présente deux trous de connexion sur un de ses côtés et est relié au tambour (K) de l'autre côté de celui-ci,
- au moins une seconde corde de frein à main (5) qui est reliée au levier (4),
- au moins une chambre de frein (6) à laquelle est reliée la seconde corde de frein à main (5),
- au moins un tuyau d'air (7) qui est relié à la chambre de frein (6),
- au moins une électrovanne (8) à laquelle est connecté le tuyau d'air (7),
- au moins un réservoir d'air (9) auquel est reliée l'électrovanne (8),
- au moins une unité de commande de véhicule (10) qui est reliée à l'électrovanne (8) par un câble et qui est adaptée pour commander l'électrovanne (8),
- au moins un interrupteur (11) qui est adapté pour commander l'unité de commande de véhicule (10).

2. Frein de stationnement automatique (1) selon la revendication 1, **comprenant** au moins un accélérateur (12) qui est adapté pour commander l'unité de commande de véhicule (10).

3. Frein de stationnement automatique (1) selon la revendication 1, **comprenant** au moins une unité de commande du moteur (13) qui est adaptée pour être commandée par l'unité de commande de véhicule (10).

4. Frein de stationnement automatique (1) selon la revendication 1, **comprenant** au moins un interrupteur (11) qui est placé sur la porte et qui empêche le mouvement des véhicules lorsque la porte est ouverte.
